# EUROPÄISCHE PATENTANMELDUNG

(11) **EP 1 892 490 A1**
(43) Veröffentlichungstag der Anmeldung: **27.02.2008**
(21) Anmeldenummer: 06017089.1
(22) Anmeldetag: 16.08.2006
(51) Int. Cl.: F25J 3/04, G05B 15/02

(54) **Verfahren und Vorrichtung zur variablen Gewinnung eines Druckprodukts durch Tieftemperatur-Gaszerlegung**

(71) Anmelder: Linde Aktiengesellschaft, 80807 München (DE)
(72) Erfinder: Ewert, Ulrich, 83673 Bichl (DE); Wanner, Alfred, Dr., 82041 Deisenhofen (DE)
(74) Vertreter: Imhof, Dietmar

(57) **Zusammenfassung**

Bei dem Verfahren und der Vorrichtung zur variablen Gewinnung eines Druckprodukts (16) durch Tieftemperatur-Gaszerlegung in einem Destilliersäulen-System (12) wird Einsatzgas (1) abgekühlt und dem Destilliersäulen-System zugeführt (11,23). Ein Produktstrom wird aus dem Destilliersäulen-System entnommen (13). Der Produktstrom wird in flüssigem Zustand auf einen hohen Druck gebracht (14). Der Produktstrom (15) wird unter dem hohen Druck durch indirekten Wärmeaustausch (9) mit einem Wärmeträgerstrom verdampft oder pseudo-verdampft. Der Wärmeträgerstrom (21) wird bei dem indirekten Wärmeaustausch mindestens teilweise kondensiert oder pseudo-kondensiert. Der verdampfte beziehungsweise pseudo-verdampfte Produktstrom wird in variabler Menge als Druckprodukt abgeführt. Die bei dem indirekten Wärmeaustausch übertragene Wärmemenge wird bilanziert (32). Aus dieser Bilanz wird ein Sollwert für die Menge mindestens eines der an dem indirekten Wärmeaustausch beteiligten Ströme berechnet (21). Dieser Sollwert wird im Rahmen einer Vorwärtssteuerung eingestellt.

## Beschreibung

Die Erfindung betrifft ein Verfahren zur Gewinnung eines Druckprodukts durch Tieftemperatur-Gaszerlegung, insbesondere Tieftemperatur-Luftzerlegung mittels Innenverdichtung gemäß dem Oberbegriff des Patentanspruchs 1.

Verfahren und Vorrichtungen zur Gaszerlegung, insbesondere zur Tieftemperaturzerlegung von Luft sind zum Beispiel aus Hausen/Linde, Tieftemperaturtechnik, 2. Auflage 1985, Kapitel 4 (Seiten 281 bis 337) bekannt. Ein "Destilliersäulen-System" umfasst mindestens eine Trennsäule sowie die den Trennsäulen des Systems zugeordneten Kondensatoren und Verdampfer. Das Destilliersäulen-System der Erfindung kann als Einsäulensystem zur Stickstoff-Sauerstoff-Trennung ausgebildet sein, als Zweisäulensystem (zum Beispiel als klassisches Linde-Doppelsäulensystem), oder auch als Drei- oder Mehrsäulensystem. Es kann zusätzlich zu den Kolonnen zur Stickstoff-Sauerstoff-Trennung weitere Vorrichtungen zur Gewinnung anderer Luftkomponenten, insbesondere von Edelgasen aufweisen, beispielsweise eine Argongewinnung.

Bei einem Innenverdichtungsprozess wird mindestens eines der Produkte flüssig aus einer der Säulen des Destilliersäulen-Systems oder aus einem mit einer dieser Säulen verbundenen Kondensator entnommen, in flüssigem Zustand auf einen erhöhten Druck gebracht, in indirektem Wärmeaustausch mit einem Wärmeträgerstrom, beispielsweise mit Einsatzluft oder Stickstoff, verdampft beziehungsweise (bei überkritischem Druck) pseudo-verdampft und schließlich als gasförmiges Druckprodukt gewonnen und einem Abnahmesystem zugeführt. Die Druckerhöhung in der Flüssigkeit kann durch jede bekannte Maßnahme durchgeführt werden. Regelmäßig werden dabei Pumpen eingesetzt. Möglich ist aber auch die Ausnutzung eines hydrostatischen Potentials und/oder die Druckaufbauverdampfung an einem Tank. Der Wärmeträgerstrom kondensiert oder (bei überkritischem Druck) pseudo-kondensiert bei dem indirekten Wärmeaustausch.

Derartige Innenverdichtungsverfahren sind zum Beispiel bekannt aus DE 830805, DE 901542 (= US 2712738/US 2784572), DE 952908, DE 1103363 (= US 3083544), DE 1112997 (= US 3214925), DE 1124529, DE 1117616 (= US 3280574), DE 1226616 (= US 3216206), DE 1229561 (= US 3222878), DE 1199293, DE 1187248 (= US 3371496), DE 1235347, DE 1258882 (= US 3426543), DE 1263037 (= US 3401531), DE 1501722 (= US 3416323), DE 1501723 (= US 3500651), DE 2535132 (= US 4279631), DE 2646690, EP 93448 B1 (= US 4555256), EP 384483 B1 (= US 5036672), EP 505812 B1 (= US 5263328), EP 716280 B1 (= US 5644934), EP 842385 B1 (= US 5953937), EP 758733 B1 (= US 5845517), EP 895045 B1 (= US 6038885), DE 19803437 A1, EP 949471 B1 (= US 6185960 B1), EP 955509 A1 (= US 6196022 B1), EP 1031804 A1 (= US 6314755), DE 19909744 A1, EP 1067345 A1 (= US 6336345), EP 1074805 A1 (= US 6332337), DE 19954593 A1, EP 1134525 A1 (= US 6477860), DE 10013073 A1, EP 1139046 A1, EP 1146301 A1, EP 1150082 A1, EP 1213552 A1, DE 10115258 A1, EP 1284404 A1 (= US 2003051504 A1), EP 1308680 A1 (= US 6612129 B2), DE 10213212 A1, DE 10213211 A1, EP 1357342 A1 oder DE 10238282 A1 DE 10302389 A1, DE 10334559 A1, DE 10334560 A1, DE 10332863 A1, EP 1544559 A1, EP 1585926 A1, DE 102005029274 A1 EP 1666824 A1, oder EP 1672301 A1.

Die Wärmetauscher von Innenverdichtungsanlagen sind besonderen Anforderungen ausgesetzt die durch die bei dem indirekten Wärmeaustausch auftretenden Phasenänderungen des oder der Innenverdichtungsströme bedingt sind. Schnelle Änderungen der Innenverdichtungsströme oder der zur Anwärmung beziehungsweise Verdampfung der Innenverdichtungsströme dienenden Wärmeträgerströme können zu hohen Beanspruchungen der Wärmetauscher führen und diese mechanisch überfordern.

Bisher werden die Wärmetauscher durch relativ einfache Abschaltlogiken abgesichert, die zum Beispiel beim Ausfall von Innenverdichtungspumpen oder beim Ausfall des wichtigsten Wärmeträgerstroms eine Abschaltung der Anlage oder eine Überführung in einen sicheren Zustand bewirkt.

Diese Vorgehensweise hat Nachteile, da komplexe Anlagenkonfigurationen es schwierig machen, anhand von binären Zuständen die relevanten Störungen zu erkennen. Eine Abschaltung der Anlage wie bisher praktiziert führt zu zusätzlichen Mengenänderungen und damit Belastungen der Wärmetauscher, die nach Möglichkeit vermieden werden sollten.

Der Erfindung liegt daher die Aufgabe zugrunde, eine Verfahren der eingangs genannten Art und eine entsprechende Vorrichtung anzugeben, die zu einer relativ geringen Belastung der Wärmetauscher für den indirekten Wärmeaustausch zwischen (pseudo-)verdampfendem Produktstrom beziehungsweise Produktströmen und Wärmeträgerstrom beziehungsweise Wärmeträgerströmen führt.

Diese Aufgabe wird dadurch gelöst, dass
- die bei dem indirekten Wärmeaustausch übertragene Wärmemenge bilanziert wird,
- aus dieser Bilanz ein Sollwert für die Menge mindestens eines der an dem indirekten Wärmeaustausch beteiligten Ströme berechnet wird und
- dieser Sollwert im Rahmen einer Vorwärtssteuerung eingestellt wird.

Gemäß der Erfindung werden die Wärmeträgerströme so geregelt, dass Mengenänderungen des oder der Innenverdichtungsströme möglichst schnell kompensiert werden. Abgeschaltet wird nur dann, wenn ein großes Missverhältnis zwischen den Innenverdichtungs- und den Wärmeträgerströmen entsteht. Relevant sind dabei hauptsächlich die Mengenänderungen der Innenverdichtungs- und Wärmeträgerströme.

Bei der Erfindung wird das Verhältnis der Innenverdichtungs- und Wärmeträgerströme berechnet und die Ergebnisse dieser Bilanzrechnung als Kriterien für Regelungen und Abschaltungen verwendet. In die Bilanzrechnung gehen die gemessenen Mengen sowie Parameter für die unterschiedlichen Wärmekapazitäten der Ströme ein. Optional können auch die gemessenen Drücke und Temperaturen der Wärmetauscherströme in der Bilanzrechnung berücksichtigt werden. Mit Rücksicht auf die Zuverlässigkeit der Bilanzrechnung kann es in der Praxis vorteilhaft sein, die Anzahl der in die Bilanzgleichung eingehenden Messungen möglichst gering zu halten und unwesentliche Einflussgrößen zu vernachlässigen. Dies gilt zum Beispiel für die Drücke und Temperaturen, die bei den zu betrachtenden Betriebsfällen häufig annähernd konstant sind.

Das Verhältnis der Innenverdichtungs- und Wärmeträgerströmen kann mit Mengenänderungen an einem oder mehreren Strömen abgeglichen werden. Üblicherweise ist der freie Parameter, mit dem das Verhältnis der Innenverdichtungs- und Wärmeträgerströme abgeglichen werden kann, der Wärmeträgerstrom, der im Allgemeinen von einem Booster-Kompressor stammt. Das Ergebnis der Bilanzrechnung ist folglich die erforderliche Menge des Wärmeträgerstroms, mit der das Verhältnis zwischen Wärmeträger- und Innenverdichtungsströmen abgeglichen ist. Dieses Ergebnis wird im Rahmen einer Vorwärtssteuerung (Feed Forward Control) direkt als Sollwert an den Mengenregler des Wärmeträgerstroms weitergegeben.

Eine Vorwärtssteuerung stellt einen mit einer Stelleinrichtung verbundenen Berechnungsalgorithmus dar, der ähnlich wie ein Regelkreis dazu dient, Prozesswerte zu beeinflussen. Im Gegensatz zu einem Regelkreis wirken bei einer Vorwärtssteuerung die durch den Berechnungsalgorithmus an der Stelleinrichtung eingestellten Werte nicht auf die Eingangswerte bzw. Parameter des Berechnungsalgorithmus zurück.

Da in der Praxis die Bilanzrechnung immer eine gewisse Ungenauigkeit aufweisen wird, ist es günstig, die Ergebnisse der Bilanzrechnung anhand von gemessenen Kriterien zu korrigieren. Gemäß einer weiteren Ausgestaltung der Erfindung wird daher die Temperaturdifferenz des Wärmeträgerstroms und des Produktstroms bei dem indirekten Wärmeaustausch gemessen, und der gemessene Wert dieser Temperaturdifferenz wird bei der Berechnung des Sollwerts berücksichtigt.

Falls ein Ungenauigkeit in dem berechneten Sollwert des Entspannungsstrom vorliegt, so lässt sich dies anhand der Temperaturdifferenzen zwischen ein- und austretenden Strömen am warmen Ende des Wärmetauschers erkennen. Der erforderliche Korrekturparameter wird am Ausgang eines Temperaturdifferenzreglers berechnet, der die Temperaturdifferenz zwischen dem Haupt-Wärmeträgerstrom und dem größten Innenverdichtungsstrom regelt. Der Korrekturparameter wirkt am günstigsten multiplikativ auf den Sollwert des Entspannungsstroms.

Weiterhin ist es vorteilhaft, wenn die Menge mindestens eines der an dem indirekten Wärmeaustausch beteiligten Ströme gemessen wird, der gemessene Mengenwert mit dem berechneten Sollwert verglichen wird und in Abhängigkeit von der Differenz zwischen gemessenem Mengenwert und Sollwert eine Abschaltung des indirekten Wärmeaustauschs eingeleitet wird. Mengenmessung und Sollwert beziehen sich auf die gleiche physikalische Größe, vorzugsweise die Menge des Wärmeträgerstroms.

Entsteht ein großes Missverhältnis zwischen der berechneten und gemessenen Menge des Wärmeträgerstroms und kann dieses Verhältnis nicht innerhalb eines tolerierbaren Zeitraums ausgeglichen werden, so ist eine Abschaltung vorzusehen um die Wärmetauscher zu schützen und den Prozess in einen sicheren Zustand zu überführen. Parameter dieser Abschaltung sind das maximal tolerierbare Missverhältnis sowie der maximal tolerierbare Zeitraum, wobei sich beide Parameter gegenseitig beeinflussen, zum Beinspiel kann ein geringeres Missverhältnis für einen längeren Zeitraum toleriert werden. Um letzterem Rechnung zu tragen ist es möglich, das Integral des Missverhältnisses über die Zeit als Abschaltkriterium zu verwenden, was regelungstechnisch durch einen dynamischen Filter erster Ordnung (PT1) ausreichend genau abgebildet werden kann.

Da bei den in die Bilanzrechnung eingehenden Mengenmessungen kurzzeitige Störungen auftreten können, ist es günstig, die Mengenmessungen entsprechend zu filtern.

Das erfindungsgemäße Verfahren bietet einen zuverlässigern Schutz der Wärmetauscher von Luft- und anderen Gaszerlegungsanlagen mit innenverdichteten Produktströmen. Der Schutz wirkt direkt und bei sämtlichen Störfallszenarien. Durch die Vorwärtssteuerung der Menge von mindestens einem Wärmeträgerstrom oder Innenverdichtungsstrom reagiert das System sehr schnell auf Störungen. Abschaltungen können dadurch vermieden werden, was sich insgesamt positiv auf die zu erwartende Lebensdauer der Anlage, insbesondere von Wärmetauschern, Maschinen und anderen Bauteilen auswirkt. Gelingt es der Regelung nicht, die erforderlichen Mengenverhältnisse abzugleichen, so steht immer noch ein zuverlässiges Abschaltkriterium zur Verfügung das, bei entsprechender Konfiguration der Steuerung, abhängig von der Größe des Missverhältnisses die Anlage unterschiedlich schnell abschaltet.

Das Verfahren kann grundsätzlich an jedem Wärmetauscher eingesetzt werden, auch an einem oder mehreren Wärmetauschem ohne Innenverdichtung oder ohne (Pseudo-)Verdampfung. Vorteilhaft ist es mit Sicherheit überall dort, wo ein Phasenübergang innerhalb des Wärmetauschers potentiell hohe Materialbeanspruchungen verursachen kann.

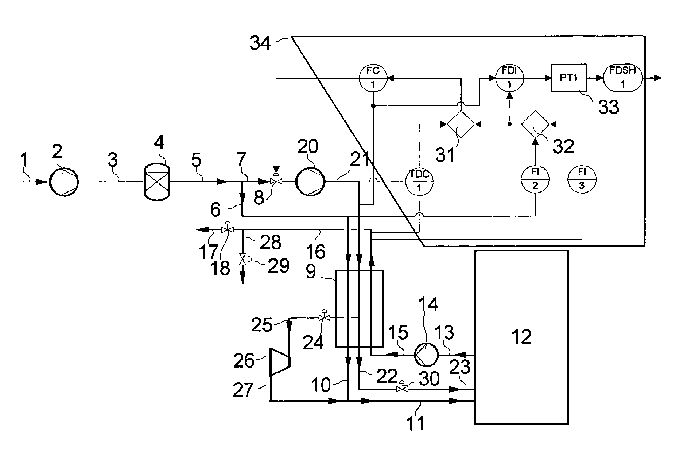

Die Erfindung sowie weitere Einzelheiten der Erfindung werden im Folgenden anhand eines in der Zeichnung schematisch dargestellten Ausführungsbeispiels näher erläutert. Das Beispiel bezieht sich auf eine Luftzerlegungsanlage mit Erzeugung von gasförmigem Sauerstoff als Druckprodukt.

Luft 1 wird in einem Hauptluftverdichter auf einen ersten Druck P1 gebracht. Die Druckluft 3 wird in einer Reinigungseinrichtung 4 gereinigt. Die gereinigte Luft 5 wird in einen ersten Teilstrom 6 und einen zweiten Teilstrom 7 verzweigt. Der erste Luftteilstrom 6 wird in einem Hauptwärmetauscher 9 auf etwa Taupunkt abgekühlt und strömt über die Leitungen 10 und 11 in das Destilliersäulen-System, das in dem Beispiel eine Hochdrucksäule und eine Niederdrucksäule aufweist, die über einen gemeinsamen Kondensator-Verdampfer, den so genannten Hauptkondensator, in Wärmeaustauschbeziehung stehen (in der Zeichnung nicht dargestellt). Die Luft 11 wird in praktisch vollständig gasförmigem Zustand in die Hochdrucksäule eingeleitet.

In dem Destilliersäulen-System zur Stickstoff-Sauerstoff-Trennung 12 wird die Luft in mindestens einen sauerstoffangereicherten Produktstrom 13 und mindestens eine stickstoffangereicherte Fraktion (nicht dargestellt) zerlegt. Der Produktstrom 13 weist beispielsweise einen Sauerstoffgehalt von 98 bis 99,5 mol-% auf. Er wird flüssig entnommen, zum Beispiel aus dem Sumpf der Niederdrucksäule oder dem Verdampfungsraum des Hauptkondensators. In einer Pumpe 14 wird der flüssige Produktstrom 13 auf einen erhöhten Druck PIV gebracht, der höher als der Betriebsdruck der Destilliersäule ist, aus der er abgezogen wurde, und beispielsweise 15 bis 30 bar beträgt. Der Sauerstoff 15 wird unter dem erhöhten Druck in flüssigem oder überkritischem Zustand zum kalten Ende des Hauptwärmetauschers 9 geführt und im Hauptwärmetauscher verdampft beziehungsweise pseudo-verdampft und auf etwa Umgebungstemperatur angewärmt. Über ein Austrittsventil 18 tritt der Produktstrom als gasförmiges Druckprodukt 16, 17 aus der Anlage aus und wird zu einem oder mehreren Verbrauchern geleitet. Alternativ oder zusätzlich wird über die Leitung 28 und das Ventil 29 nicht verwertbares Produkt in die Atmosphäre abgeblasen.

Die zur (Pseudo-)Verdampfung benötigte Wärme liefert ein Wärmeträgerstrom 21, der auch Innenverdichtungsluft genannt wird und einen Teil des zweiten Luftteilstroms 7 darstellt, der in einem Nachverdichter 20 auf einen hohen Druck PW nachverdichtet wird, der höher als der erste Druck P1 ist und beispielsweise 30 bis 40 bar beträgt. Dieser Druck im Teilstrom 21/22 wird über das Ventil 8 bzw. die Leitschaufeln des Verdichters 20 eingestellt. Unter diesem hohen Druck durchströmt die Innenverdichtungsluft 22 den Hauptwärmetauscher 9 bis zum kalten Ende und wird dabei in indirektem Wärmeaustausch mit dem (pseudo-)verdampfenden Sauerstoff 15 kondensiert oder - bei überkritischem Druck - pseudo-kondensiert. Die Innenverdichtungsluft wird über ein Ventil 30 entspannt und tritt bei 23 in teilweise verflüssigtem Zustand in das Destilliersäulen-System zur Stickstoff-Sauerstoff-Trennung ein.

Ein anderer Teil 25 des zweiten Luftteilstroms 7/21 wird als Turbinenstrom bei einer Zwischentemperatur aus dem Hauptwärmetauscher herausgeführt. Seine Menge relativ zur Innenverdichtungsluft wird über die Leitschaufeln der Turbine eingestellt. Das Verhältnis der Mengenströme von erstem Teilstrom 6 und zweitem Teilstrom 7/21 wird über ein Entspannungsventil 30 in Teilstrom 22 eingestellt.

Die Turbinenluft 25 wird in einer Expansionsturbine 26 auf etwa den Betriebsdruck der Hochdrucksäule entspannt. Die entspannte Turbinenluft 27 wird gemeinsam mit dem ersten Teilstrom 10 über Leitung 11 in die Hochdrucksäule des Destilliersäulen-Systems zur Stickstoff-Sauerstoff-Trennung 12 eingeleitet. Die Turbine 26 stellt in dem Ausführungsbeispiel ein wesentliches Element des Kälteerzeugungssystems der Anlage dar.

Im Folgenden wird die Regel- und Steuereinrichtung 34 des Ausführungsbeispiels beschrieben.

Über zwei Messeinrichtungen Fl2 und Fl3 werden die aktuellen Mengen des ersten Luftteilstroms 6 stromaufwärts des indirekten Wärmeaustauschs 9 und des Produktstroms 16 stromabwärts des indirekten Wärmeaustauschs 9 gemessen. (An die Stelle der unmittelbaren Messung der Menge des Luftteilstroms 6 kann auch eine Differenz aus den entsprechenden Messwerten für die Ströme 5 und 21 treten.) Die Messwerte werden an eine erste Recheneinheit 32 übermittelt, die eine Bilanzrechnung durchführt und daraus einen Sollwert für die Menge des zweiten Luftteilstroms 7/21 berechnet. In die Bilanzrechnung können die Messwerte weiterer Ströme eingehen, die an dem indirekten Wärmeaustausch 9 beteiligt sind, nicht jedoch die Menge des zweiten Luftteilstroms 7/21, deren Sollwert berechnet wird.

Der Sollwert wird einerseits an eine zweite Recheneinheit weitergegeben, in die außerdem der Ausgang des Temperaturdifferenzreglers TDC1 eingeht. TDC1 regelt die Differenzen der am warmen Ende des Wärmetauschers 9 gemessenen Temperaturen der Ströme 16 und 21. Mit Hilfe des Ausgangswertes von TDC1 korrigiert die zweite Recheneinheit den Sollwert und gibt diesen an den Mengenregler für den Wärmeträgerstrom FC1 weiter, der den Mengenstrom des zweiten Luftteilstroms 7/21 auf diesen Sollwert einstellt.

Andererseits wird der von der ersten Recheneinheit 32 berechnete Sollwert an eine Vergleichseinheit FDI1 weitergegeben, welche diesen mit dem aktuellen Messwert für den Mengenstrom des zweiten Luftteilstroms 7/21 vergleicht. Die Differenz zwischen Soll- und Messwert wird zum Zwecke der Abschaltverzögerung gefiltert (33). Der gefilterte Wert ist Eingangsgröße für einen Grenzwertgeber FDSH1, der gegebenenfalls ein Signal 35 zur Anlagenabschaltung ausgibt.

Die Regelungs- und Steuerungsfunktionen einschließlich der ersten und die zweiten Recheneinheit 32 und 31 können selbstverständlich durch dieselbe Hardware gebildet sein, beispielsweise eine Mikroprozessoreinheit oder einen Computer.

Selbstverständlich ist die Erfindung auf jedes andere Innenverdichtungsverfahren anzuwenden, insbesondere auf solche mit einer abweichenden Kälteerzeugung mit einer oder mehreren Turbinen, die Luft in die Hochdrucksäule und/oder in die Niederdrucksäule einblasen oder eine stickstoffangereicherte Fraktion aus einer der Trennsäulen des Destilliersäulen-Systems 12 entspannen.

## Patentansprüche

1. Verfahren zur variablen Gewinnung eines Druckprodukts durch Tieftemperatur-Gaszerlegung in einem Destilliersäulen-System, bei dem
- Einsatzgas abgekühlt und dem Destilliersäulen-System zugeführt wird,
- ein Produktstrom aus dem Destilliersäulen-System entnommen wird,
- der Produktstrom in flüssigem Zustand auf einen hohen Druck gebracht wird,
- der Produktstrom unter dem hohen Druck durch indirekten Wärmeaustausch mit einem Wärmeträgerstrom verdampft oder pseudo-verdampft wird,
- der Wärmeträgerstrom bei dem indirekten Wärmeaustausch mindestens teilweise kondensiert oder pseudo-kondensiert wird und
- der verdampfte beziehungsweise pseudo-verdampfte Produktstrom in variabler Menge als Druckprodukt abgeführt wird,
**dadurch gekennzeichnet, dass**
- die bei dem indirekten Wärmeaustausch übertragene Wärmemenge bilanziert wird,
- aus dieser Bilanz ein Sollwert für die Menge mindestens eines der an dem indirekten Wärmeaustausch beteiligten Ströme berechnet wird und
- dieser Sollwert im Rahmen einer Vorwärtssteuerung eingestellt wird.

2. Verfahren nach Anspruch 1, **dadurch gekennzeichnet, dass** die Temperaturdifferenz des Wärmeträgerstroms und des Produktstroms bei dem indirekten Wärmeaustausch gemessen wird und der gemessene Wert dieser Temperaturdifferenz bei der Berechnung des Sollwerts berücksichtigt wird.

3. Verfahren nach Anspruch 1 oder 2, **dadurch gekennzeichnet, dass** die Menge mindestens eines der an dem indirekten Wärmeaustausch beteiligten Ströme gemessen wird, der gemessene Mengenwert mit dem berechneten Sollwert verglichen wird und in Abhängigkeit von der Differenz zwischen gemessenem Mengenwert und Sollwert eine Abschaltung des indirekten Wärmeaustauschs eingeleitet wird.

4. Vorrichtung zur variablen Gewinnung eines Druckprodukts durch Tieftemperatur-Gaszerlegung in einem Destilliersäulen-System,
- mit Mitteln zum Abkühlen von Einsatzgas abgekühlt und zum Einführen abgekühlten Einsatzgases in das Destilliersäulen-System,
- mit Mitteln zum Entnehmen eines Produktstroms aus dem Destilliersäulen-System,
- mit Mitteln zur Erhöhung des Drucks des Produktstroms in flüssigem Zustand auf einen hohen Druck,
- mit einem Wärmetauscher zur Verdampfung oder Pseudo-Verdampfung des Produktstroms unter dem hohen Druck durch indirekten Wärmeaustausch mit einem mindestens teilweise kondensierenden oder pseudo-kondensierenden Wärmeträgerstrom,
- mit Mitteln zum Abführen des verdampften beziehungsweise pseudoverdampften Produktstroms in variabler Menge als Druckprodukt, **gekennzeichnet durch** Mittel zum Steuern und Regeln, die
- die bei dem indirekten Wärmeaustausch übertragene Wärmemenge bilanzieren,
- aus dieser Bilanz ein Sollwert für die Menge mindestens eines der an dem indirekten Wärmeaustausch beteiligten Ströme berechnen und
- diesen Sollwert im Rahmen einer Vorwärtssteuerung einstellen.
